# EUROPEAN PATENT APPLICATION

(11) **EP 1 599 054 A2**
(43) Date of publication of application: **23.11.2005**
(21) Application number: 05253128.2
(22) Date of filing: 20.05.2005
(51) Int. Cl.: H04Q 3/62, H04Q 3/00

(54) **Method and system for administering configuration information in a private branch exchange switch**

(30) Priority: 21.05.2004 US 851770
(71) Applicant: Avaya Technology Corp., Basking Ridge, NJ 07920 (US)
(72) Inventor: Brown, Deborah J., Red Bank, NJ 07701 (US); Gopu, Prameela R., Morganville, NJ 07751 (US); Chinnappa, Raji, Allentown, NJ 08501 (US); Ross, Timothy I., Fair Haven, NJ 07704 (US)
(74) Representative: Williams, David John

(57) **Abstract**

A administration tool is disclosed for administering a switch, such as a Private Branch Exchange (PBX) switch that optionally provides an IP Telephony feature. Data objects associated with one or more endpoints of the switch are processed, wherein at least one of the data objects inherits an intelligent property from another data object based on one more endpoint-specific criteria. The inheritance may occur as the result of an application of a predefined template to a data object. The processing of configuration data may be performed offline from the switch, using one or more classes of service that are stored remote from the switch. Changes to configuration data are propagated to affected data objects (e.g., those objects referenced by a changed object). The data objects may be imported from an external data source. Another aspect of the invention automatically creates one or more hunt groups populated with appropriate users during an import process.

## Description

### Cross-Reference to Related Aipplications

The present application is related to United States Patent Application, entitled "Method and Apparatus for Validation and Error Resolution of Configuration Data in a Private Branch Exchange Switch," filed contemporaneously herewith and incorporated by reference herein.

### Field of the Invention

The present invention relates generally to techniques for administering enterprise switches, and more particularly, to methods and apparatus for administering voice telephony systems that provide an IP telephony switching function.

### Background of the Invention

With the explosive growth of the Internet, there has been a growing trend towards Internet Protocol (IP) telephony. IP telephony allows various devices, often referred to as end-points, such as dedicated IP phones or specially configured personal computers, to initiate and receive telephone calls over the Internet or private data networks. Generally, the voice signal is compressed and translated into IP packets for transmission over the network(s).

IP telephony offers many benefits to both carriers and users that have contributed to its rapid deployment. Eventually, IP telephony technologies may replace traditional circuit switched telephony technologies, such as the Public Switch Telephone Network (PSTN). In the meantime, however, there is a substantial installed base of traditional telephone systems served by the PSTN and IP telephony must co-exist with traditional telephone systems.

A number of products are available that allow enterprises to integrate their traditional telephone systems, such as private branch exchange (PBX) switches with IP telephony features. The IP Office™ product, commercially available from Avaya, Inc., of Basking Ridge, NJ, supports voice and data communications. IP Office™ can be set up as a traditional PBX, an IP telephony server, or a combination of both. Thus, the IP Office™ product allows an enterprise to immediately implement traditional telephony, and evolve to IP over time, or to immediately implement a full IP solution.

While these emerging IP telephony products effectively allow enterprises to transition to IP telephony communications, some of the products have been difficult to administer. A number of early administration tools for such switches required specific user training and provided little, if any, assistance with the entry of configuration information. In addition, once the configuration information was entered, such administration tools allowed the configuration information to be changed without ensuring the accuracy of such changes or without providing a mechanism to resolve any errors created by the changes.

A need therefore exists for an administration tool for an enterprise telephone switch that provides improved installation and administration, with increased efficiency and reliability.

### Summary of the Invention

Generally, methods and apparatus are disclosed for administering a switch, such as a Private Branch Exchange (PBX) switch that optionally provides an IP Telephony feature. According to one aspect of the invention, a plurality of data objects associated with one or more endpoints of the switch are processed, wherein at least one of the data objects inherits an intelligent property from another data object based on one more endpoint-specific criteria. The inheritance may occur, for example, as the result of an application of a predefined template to a data object.

According to another aspect of the invention, the processing of configuration data may be performed offline from the switch, using one or more classes of service that are stored remote from the switch. Changes to configuration data are propagated to affected data objects (e.g., those objects referenced by a changed object). The data objects may be imported from an external data source. The data objects may be, for example, user objects, hunt group objects or system wide short code objects. Another aspect of the invention automatically creates one or more hunt groups populated with appropriate users during an import process.

A more complete understanding of the present invention, as well as further features and advantages of the present invention, will be obtained by reference to the following detailed description and drawings.

### Brief Description of the Drawings

FIG. 1 illustrates a network environment in which the present invention can operate;
FIG. 2 is a schematic block diagram of an exemplary administration tool incorporating features of the present invention;
FIG. 3 is a sample table describing an exemplary user import database;
FIG. 4 is a flow chart describing an exemplary implementation of a user import process that incorporates features of the present invention;
FIG. 5 illustrates an exemplary template interface that has been populated for a given user;
FIG. 6 illustrates an exemplary template button interface that indicates how the buttons on a given telephone device are programmed for a given template;
FIG. 7 illustrates an exemplary user interface that has been populated with imported user information;
FIG. 8 illustrates an exemplary error tree interface that has been populated with one or more errors;
FIG. 9 illustrates an exemplary hunt group interface that has been populated with imported hunt group information;
FIG. 10 illustrates an exemplary hunt group maintenance interface that allows a selected hunt group to be processed;
FIG. 11 is a sample table describing an exemplary dial plan import database that contains dial plan information;
FIG. 12 is a flow chart describing an exemplary implementation of a dial plan import process that incorporates features of the present invention;
FIG. 13 illustrates an exemplary dial plan interface that has been populated with imported dial plan information;
FIG. 14 illustrates an exemplary error tree interface that has been populated with one or more errors;
FIG. 15 illustrates an exemplary short code interface that has been populated with one or more short codes that have been defined for the system.
FIG. 16 illustrates the relationship between the various data classes discussed herein;
FIG. 17 is a sample table describing an exemplary validation rulebase that contains one or more syntax or conflict rules;
FIG. 18 is a sample table describing an exemplary propagation rulebase that contains one or more propagation;
FIG. 19 is a flow chart describing an exemplary implementation of a class of service process that incorporates features of the present invention;
FIG. 20 is a flow chart describing an exemplary implementation of an alternate class of service process that incorporates features of the present invention;
FIG. 21 illustrates an exemplary class of service interface that indicates the users associated with a given template (class);
FIG. 22 illustrates the relationship between the user and template data classes to implement the class of service feature;
FIG. 23 illustrates the relationship between the user and short code data classes to implement the telephone set view feature;
FIG. 24 illustrates an exemplary template button interface that indicates how the buttons on a different telephone device than shown in FIG. 6; and
FIG. 25 illustrates the relationship between a number of data objects in support of a Class of Service feature of the invention

### Detailed Description

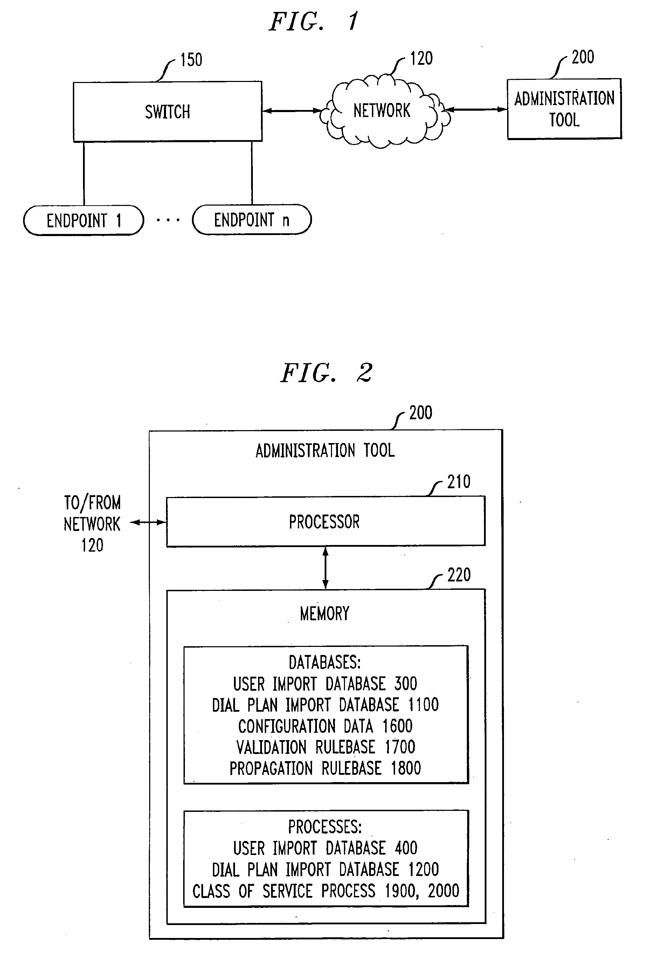

The present invention provides an administration tool 200 for administering a switch 150, such as a Private Branch Exchange (PBX) switch that optionally provides an IP Telephony feature. FIG. 1 illustrates an exemplary network environment in which the present invention can operate. As shown in FIG. 1, a user (administrator) employing an administration tool 200, discussed below in conjunction with FIG. 2, configures a switch 150 over a network 120. The network 120 may be embodied as any private or public wired or wireless network, including the Public Switched Telephone Network, a Private Branch Exchange switch, Internet, or cellular network, or some combination of the foregoing. While the present invention is illustrated using a server side implementation, where the features of the present invention are resident on the administration tool 200, the features and functions of the present invention may be deployed on a number of distributed tools 200, as well as on a client associated with the switch 150, or a combination of the foregoing, as would be apparent to a person of ordinary skill in the art.

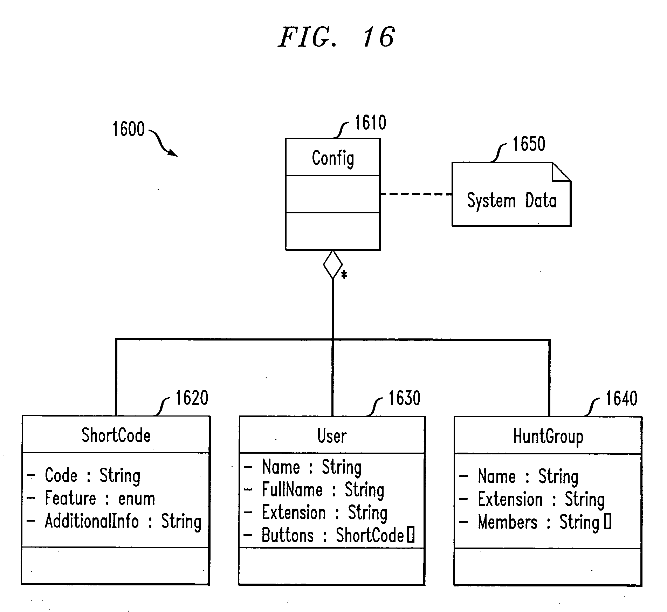

The switch 150 may be embodied, for example, as the IP Office™ switch. The switch 150 can be set up, for example, as a traditional PBX, an IP telephony server, or a combination of both. The switch 150 connects one or more endpoints 1 through endpoint n. It is noted that the endpoints can be directly connected to the switch 150, as shown in FIG. 1, or can be connected to the switch 150 over the network 120. Similarly, the administration tool 200 can be directly connected to the switch 150, or can be connected to the switch 150 over the network 120 as shown in FIG. 1. As discussed hereinafter, the administration tool 200 can process the configuration data 1600, as discussed further below in conjunction with FIG. 16, for the switch 150 in an online or offline manner. In other words, the administration tool 200 can process the configuration data 1600 whether or not the switch 150 is present.

FIG. 2 is a schematic block diagram of an exemplary administration tool 200 incorporating features of the present invention. The administration tool 200 may be any computing device, such as a personal computer, work station or server. As shown in FIG. 2, the exemplary administration tool 200 includes a processor 210 and a memory 220, in addition to other conventional elements (not shown). The processor 210 operates in conjunction with the memory 220 to execute one or more software programs. Such programs may be stored in memory 220 or another storage device accessible to the administration tool 200 and executed by the processor 210 in a conventional manner.

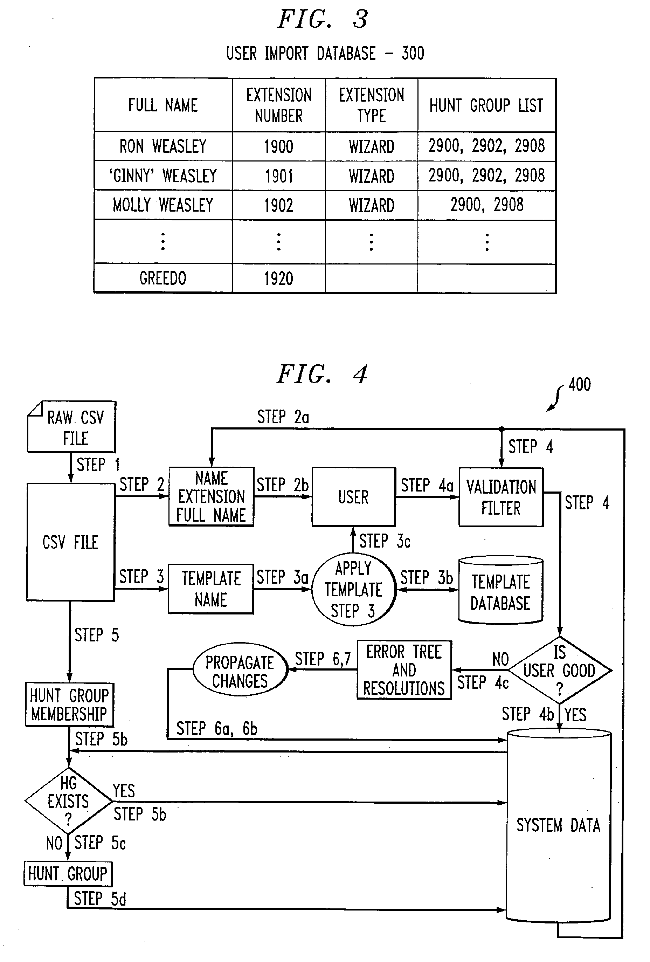

For example, the memory 220 may store a user import database 300, dial plan import database 1100, configuration data 1600, validation rulebase 1700 and propagation rulebase 1800, as discussed further below in conjunction with FIGS. 3, 11, 16, 17 and 18, respectively. In addition, the memory 220 may store a user import process 400, dial plan import process 1200 and class of service process 1900, 2000, as discussed further below in conjunction with FIGS. 4, 12, 19 and 20, respectively.

### Intelligent Import Capability

According to one aspect of the present invention, the system data can be automatically created or changed based on a seed or a small subset of data, using rules-based algorithms and patterns. The disclosed import process applies scalar data and also creates multiple inter-dependant endpoints and other auxiliary objects based on applying rules to the small subset of data.

Multiple user accounts can be efficiently created using templates. The creation or customization of default objects also includes applying hardware configuration rules and constraints as well as templates and intelligent creation of new objects, such as short codes based on patterns as specified in a template. The created or modified objects are then validated and the user can optionally fix the error with a custom set of resolutions specific to that error. For a detailed discussion of suitable error validation techniques, see, United States Patent Application, entitled "Method and Apparatus for Validation and Error Resolution of Configuration Data in an Enterprise Switch," filed contemporaneously herewith and incorporated by reference herein. Generally, when a system endpoint has been changed satisfactorily such that the error has been fixed by either changing the endpoint or changing any other conflicting endpoints in the switch, the changes are propagated throughout the system to synchronize the new settings for endpoint as well as dependant endpoints.

### User Import

FIG. 3 is a sample table describing an exemplary user import database 300 that contains user information. The user import database 300 may be implemented, for example, using a Comma Separated Value(s) (CSV) database export/import file format. In an exemplary file format, the user import database 300 includes, for each user, a full name, extension number, extension type and a list of any hunt groups, discussed below, that the user is a member of. As discussed further below in a section entitled "Validation Rules," one or more rules can constrain the data for each field of the user import database 300. The "type" field identifies a user template. When the template name does not match an existing one (or no template is identified), a "Normal" or default template can be used. The templates contain some default properties for users. If a template name is specified in the user import database 300, the properties of that template will be applied to the newly created/modified user.

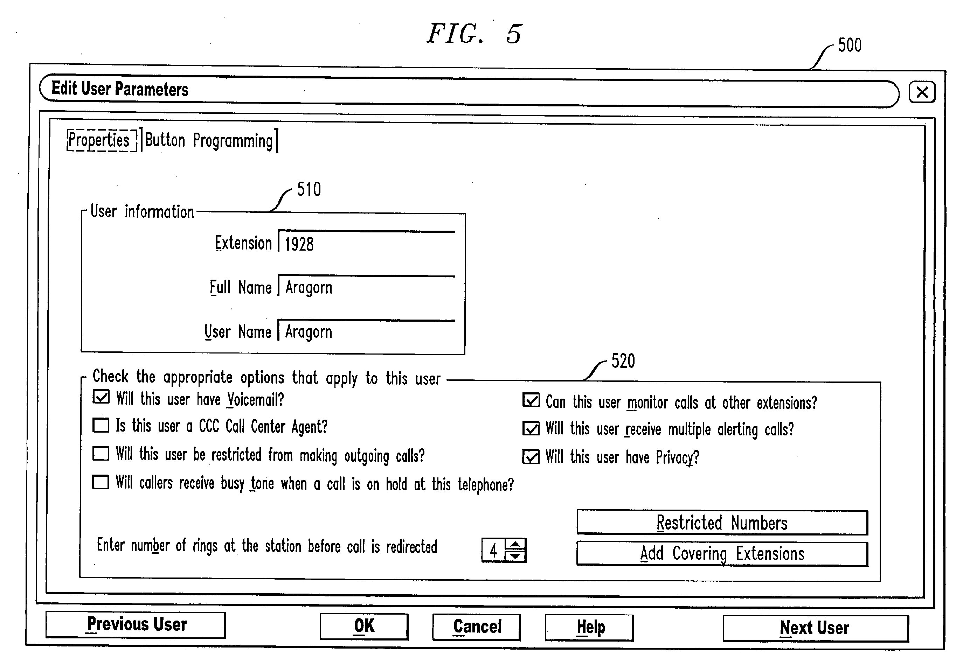

FIG. 4 is a flow chart describing an exemplary implementation of a user import process 400 that incorporates features of the present invention. Generally, the user import process 400 imports and validates user information from the user import database 300. The user import process 400 creates and customizes users and hunt groups in a system with a small set of input data. A number of graphical user interfaces that are relevant to the execution of the user import process 400 are discussed below in conjunction with FIGS. 5 through 10.

As shown in FIG. 4, the user import process 400 initially processes the user import database 300 during step 1 by verifying the format of the user import database 300 and removing any duplicate entries.

During step 2, the user import process 400 processes scalar user changes. For example, during step 2, the user import process 400 identifies an existing user or creates a new user using extension numbers. The user import process 400 also applies new or changed user/login names and full names.

During step 3, user templates are applied. In particular, the template information is obtained from the user import database 300 for the current user. The template name is validated and the corresponding matching template or default template is obtained from a template database 410. Generally, the template database 410 contains a number of predefined templates that contain some default properties for users. When the template is applied to a user, scalar properties are applied to the user in an intelligent pattern application for dependant data structures, such as Short Codes and restriction numbers.

According to one aspect of the invention, the user properties in a template are applied in an intelligent manner, so that the properties make sense for a particular user. For example, in the template, the user can override one or more system wide restrictions. When these restrictions are copied for the user, the template does not copy those restrictions as they are, but rather, the restrictions are obtained at the time of the template application to override the restrictions for that user. Similarly, all the user specific properties are set, and other non-specific properties are copied as it was in the template.

During step 4, the imported user information is validated. If a user is valid, then program control proceeds to Step 5. If, however, a user is not valid, the user errors are resolved by deleting the user, changing the user or changing other data in the switch 150. The user import process 400 iterates the validation on failed users to see if system changes due to other users in step 2 affects the validity of the failed user (previously failing users could now be valid). A new entry will not be added until any errors are fixed. All errors are accumulated until the end of he import task and are presented to the user as one or more error tree(s) during step 7, discussed below.

During step 5, hunt groups are automatically created and populated with the appropriate users. A hunt group is a list of one or more users that can be accessed by dialing a single extension number.

For a valid user, the user import process 400 validates the hunt group fields in the user import database 300. For each such valid hunt group, the user is added to the hunt group membership list. A maximum of five hunt groups for each user may be specified.

If a hunt group does not already exist, the hung group is created and the user is added to the membership list. The user import process 400 validates each new or changed hunt group and also propagates the changes.

During step 6, changes are propagated, as appropriate. For example, as discussed herein, any changes to data inside a given user, or to any other users or hunt groups or other changed data in system will be propagated to dependant data structures, such as Short Codes.

After all the objects are created by the user import process 400, if a user name, and/or extension number changed because of the import process, the changes are propagated to all the other objects in the system where these charged objects are referenced. For example, when a user name or extension changes, the incoming call routes which are directed to this user, user buttons, forwarding and follow me numbers that referred to the old extension, covering extensions, Hunt Groups, E911 zones, direct call pickup user buttons, and source numbers for all users, will be updated, if needed, to reflect the changes in the extension number, and/or name.

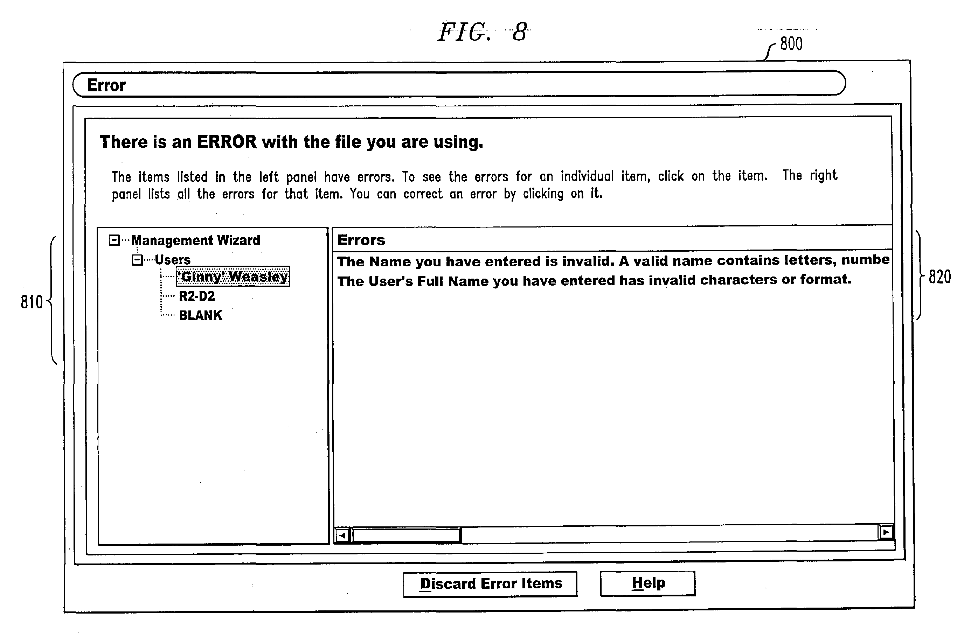

During step 7, an error tree is displayed to the user. As discussed below in conjunction with FIG. 8, an error tree 800 displays errors for different failed users and failed dependent data, such as Short Codes, after all users are processed. The error tree 800 provides a convenient mechanism for resolving errors through deletion, changes to the user data or to other endpoints in the switch 150. After the error tree 800 is processed, program control returns to step 4 to re-validate the data.

FIG. 5 illustrates an exemplary template interface 500 that has been populated for a given user. As shown in FIG. 5, the exemplary template interface 500 includes a section 510 for entering user information and a section 520 for configuring various template parameters for a given user. Thus, the user entered into section 510 will inherit the properties associated with the template in accordance with the specific configuration settings selected in section 520. The inherited user information is determined at the time the template is applied to the user and may be determined in accordance with one or more rules. In this manner, the user is said to inherit one or more "intelligent" properties from the template, in addition to any scalar properties associated with the template. The intelligent properties allow inherited properties to be tailored to a given user, and allow one or more default properties to be overridden. For example, if the first box in section 520 is enabled, indicating that the user will have voice mail, the appropriate short code for another user to directly call this user's voice mail box is automatically generated.

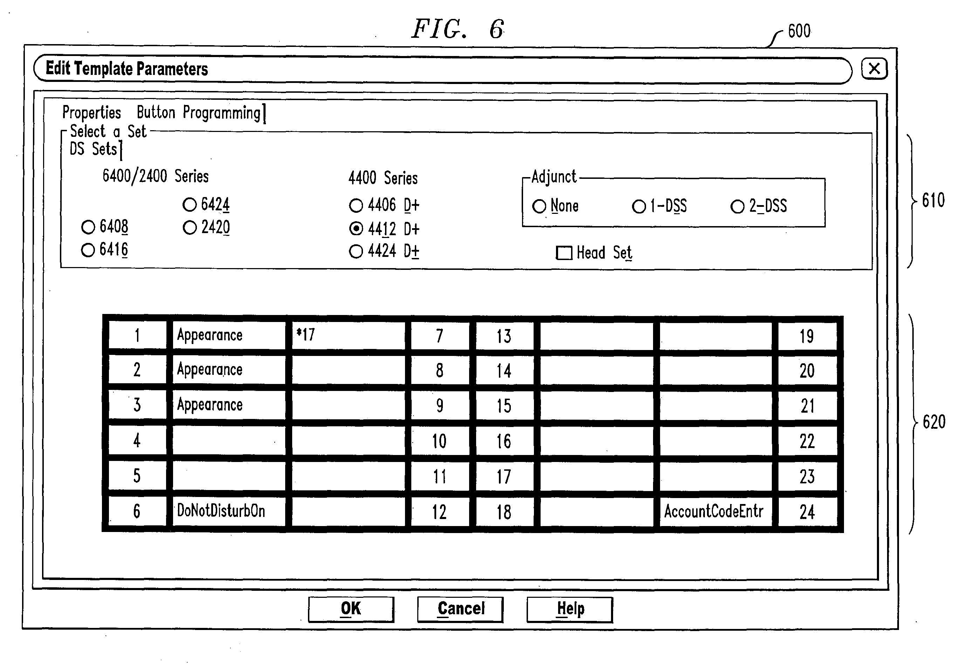

FIG. 6 illustrates an exemplary template button interface 600 that indicates how the buttons on a given telephone device are programmed for a given template. As shown in FIG. 6, the exemplary template button interface 600 includes allows a user to select a given telephone device from a list 610 and provides a corresponding indication of the button programming for the selected device in a field 620, according to a particular template. A particular device type, such as the most popular device type, can be preselected in field 610 as a default device.

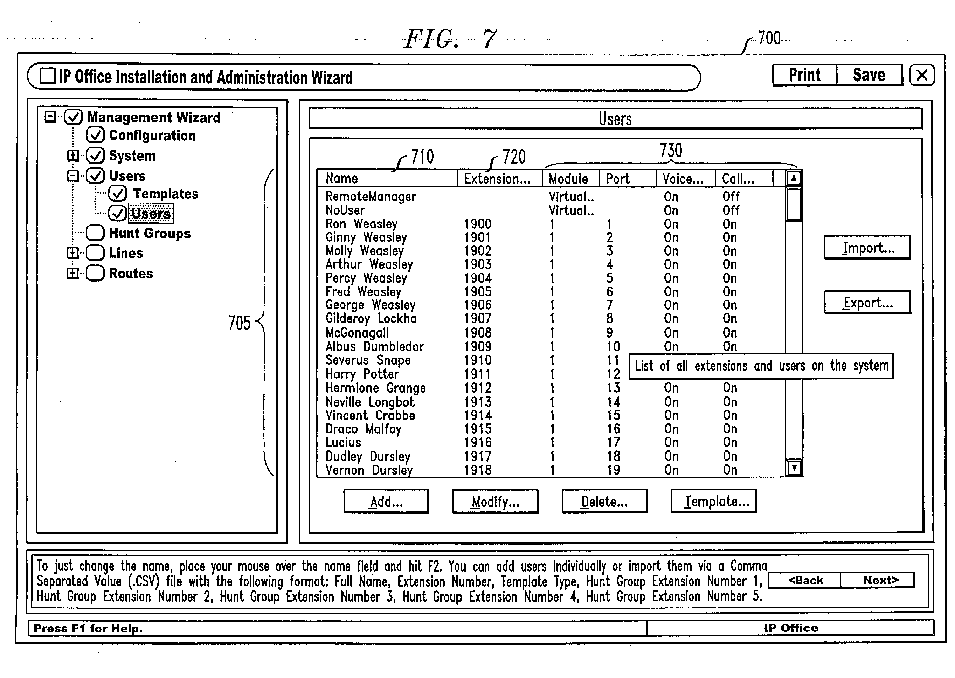

FIG. 7 illustrates an exemplary user interface 700 that has been populated with imported user information. As shown in FIG. 7, the exemplary user interface 700 includes a list 705 of the registered users. For each registered user, the user name is identified in field 710 and the user extension is identified in field 730. One or more additional fields 730 contain additional user information, such as module type and port number.

FIG. 8 illustrates an exemplary error tree interface 800 that has been populated with one or more errors. As shown in FIG. 8, the exemplary error tree interface 800 includes a first section 810 identifying one or more errors that were detected during the user import process 400 and a second section 820 providing additional details on an error selected in the first section 810.

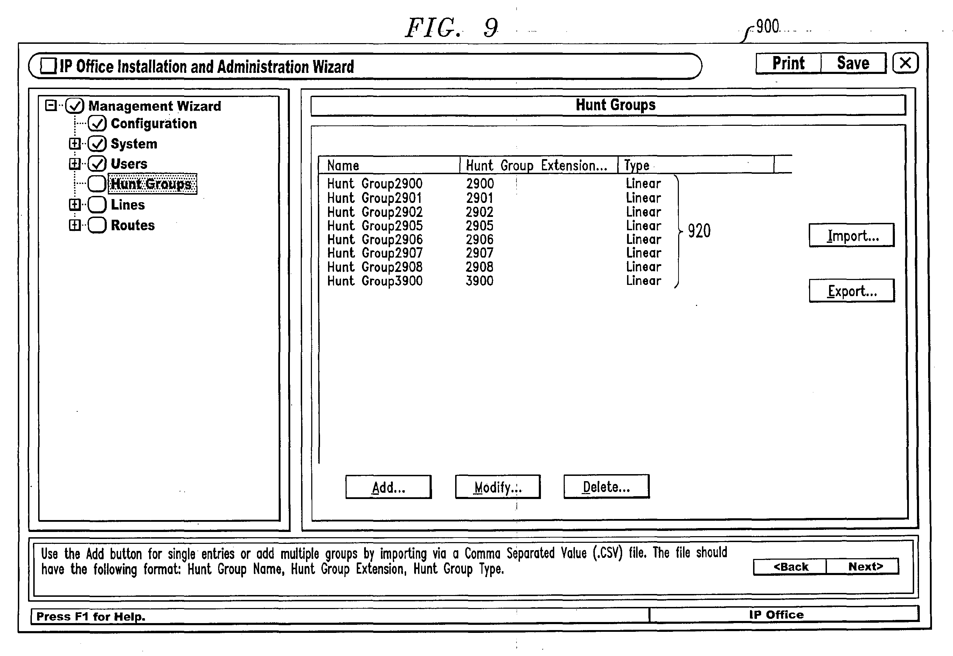

FIG. 9 illustrates an exemplary hunt group interface 900 that has been populated with imported hunt group information. As shown in FIG. 9, the exemplary hunt group interface 900 includes a list of all the hunt groups that were established by the user import process 400. For each created hunt group identified in section 920, the hunt group interface 900 identifies the hunt group extension number and hunt group type.

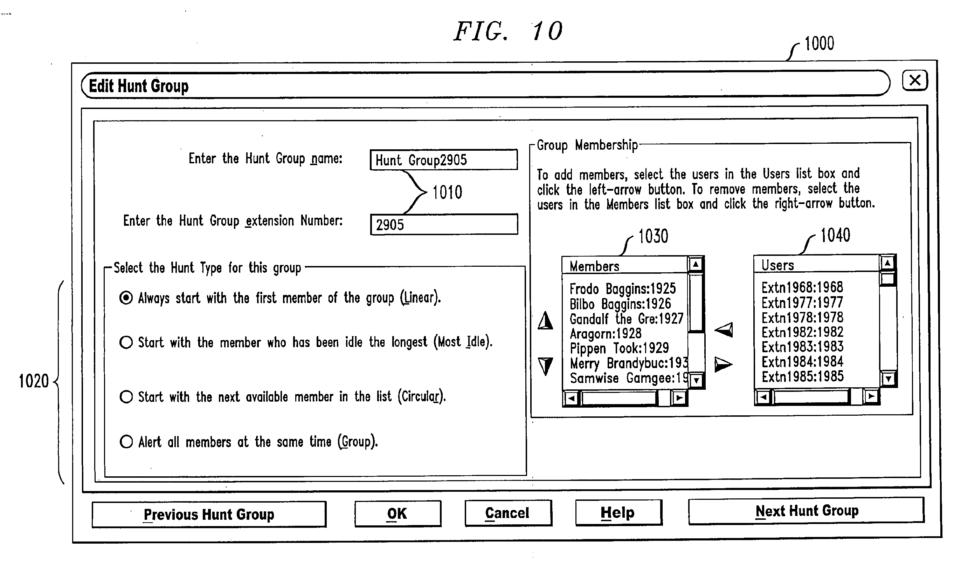

FIG. 10 illustrates an exemplary hunt group maintenance interface 1000 that allows a selected hunt group to be processed. As shown in FIG. 10, the exemplary hunt group maintenance interface 1000 includes a field 1010 for entering a desired hunt group, and a section 1020 for selecting the hunt properties of the hunt group. Window 1030 optionally identifies the hunt group members by name and extension number and window 1040 optionally identifies all possible the hunt group members by name and extension number.

### Dial Plan Import

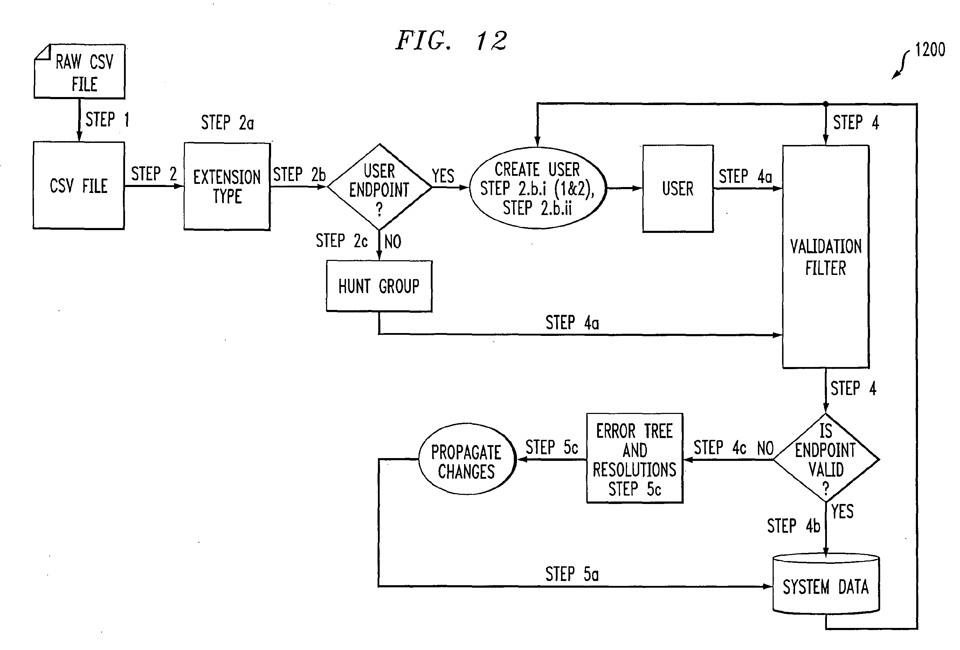

The dial plan import feature of the present invention creates and customizes a switch dial plan with physical and virtual users and hunt groups in a system with a small set of input data. Generally, a dial plan identifies all of the endpoints in the switch 150 that are dial-able, including user extensions, hunt groups, emergency and dial out code. Among other benefits the dial plan import feature of the present invention provides flexibility to accommodate any contiguous or non-contiguous extension range. A dial plan import process 1200, shown in FIG. 12, processes an imported list of extensions, and if the attempted number of imported physical extensions exceeds the hardware limitations, then the physical extensions are automatically converted to virtual extensions.

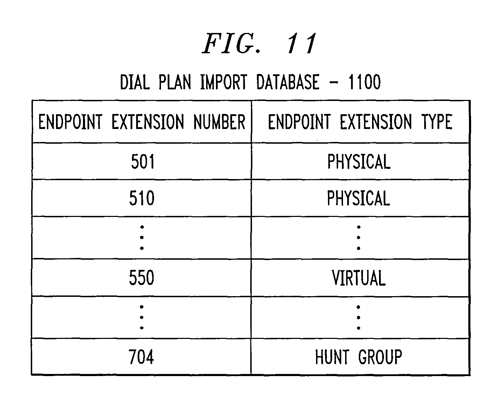

FIG. 11 is a sample table describing an exemplary dial plan import database 1100 that contains dial plan information. The dial plan import database 1100 may be implemented, for example, using a Comma Separated Value(s) (CSV) database export/import file format. In an exemplary file format, the dial plan import database 1100 includes, for each endpoint, an endpoint extension number and an endpoint type. As discussed further below in a section entitled "Validation Rules," one or more rules can constrain the data for each field of the dial plan import database 1100. The Endpoint Type can be, for example, "Physical," "Virtual" or "Hunt Group." A physical extension implies a user with a phone having an extension on the switch 150. A virtual extension implies a guest user without a real extension, or that shares a phone on the switch 150.

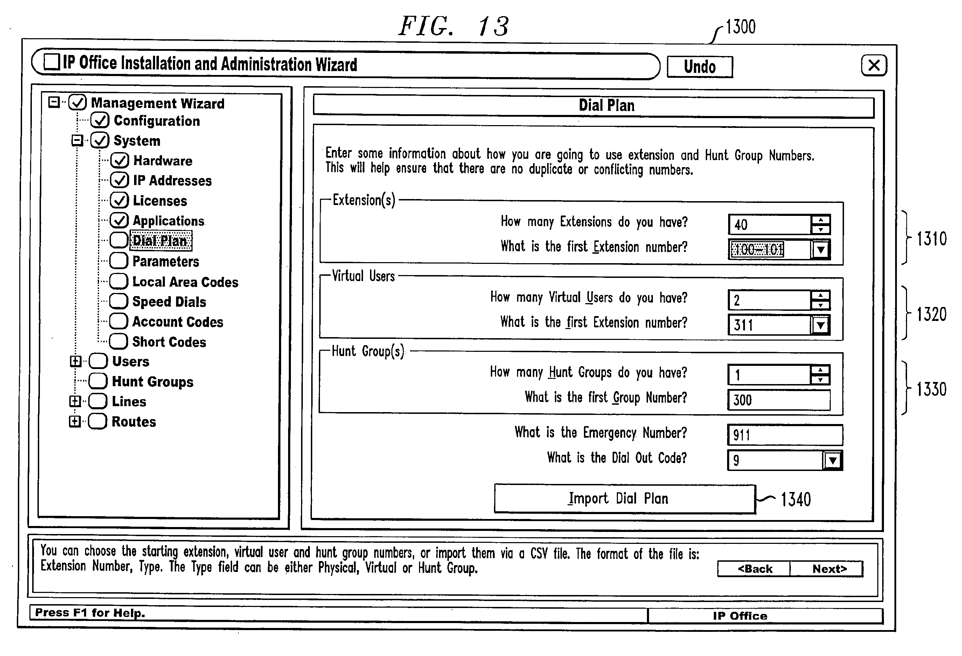

FIG. 12 is a flow chart describing an exemplary implementation of a dial plan import process 1200 that incorporates features of the present invention. Generally, the dial plan import process 1200 creates and customizes a switch dial plan from the dial plan import database 1100. A number of graphical user interfaces that are relevant to the execution of the dial plan import process 1200 are discussed below in conjunction with FIGS. 13 through 15.

As shown in FIG. 12, the dial plan import process 1200 initially processes the dial plan import database 1100 during step 1 by verifying the format of the dial plan import database 1100, sorting entries and removing any duplicate entries. During step 2, endpoints, such as Physical or Virtual users and Hunt Groups are processed. Existing physical/virtual users or hunt groups are identified. A new user is created as follows. If the type of user requested is "physical," a test is performed to check if any free physical extension is present (limited by hardware specified in configuration). If a free physical extension is available, a physical user is created using specified extension number and set dependent endpoints. If all physical extensions are exhausted, a user is created with a specified extension number, but made as type "virtual." If the type of user requested is a "virtual" endpoint, the user is created with the specified extension number and made as type "virtual." If the Type of user requested is "hunt group," a hunt group is created using the extension number.

During step 3 of the dial plan import process 1200, a set of minimum switch constraints are applied. After all the users are created as per the dial plan import database 1100, any remaining physical extensions are created according to the default dial plan numbering to ensure that there are the required number of physical extensions.

The imported dial plan information is validated during step 4. The validation is performed for each changed or created user or hunt group and all the dependant data structures. If an endpoint is valid, then program control proceeds to Step 5. If, however, an endpoint is not valid, the endpoint errors are resolved by deleting the endpoint, changing the endpoint or changing other data in the switch 150. A new entry will not be added until any errors are fixed. All errors are accumulated until the end of the import task and are presented to the user as one or more error tree(s) during step 6, discussed below.

During step 5, changes are propagated, as appropriate. For example, as discussed herein, any changes to data inside a given user, or to any other users or hunt groups or other changed data in system will be propagated to dependant data structures, such as Short Codes.

After all the objects are created by the dial plan import process 1200, if a user name, and/or extension number changed because of the import process, the changes are propagated to all the other objects in the system where these changed objects are referenced. For example, when a user name or extension changes, the incoming call routes which are directed to this user, user buttons, forwarding and follow me numbers that referred to the old extension, covering extensions, Hunt Groups, E911 zones, direct call pickup user buttons, and source numbers for all users, will be updated, if needed, to reflect the changes in the extension number, and/or name.

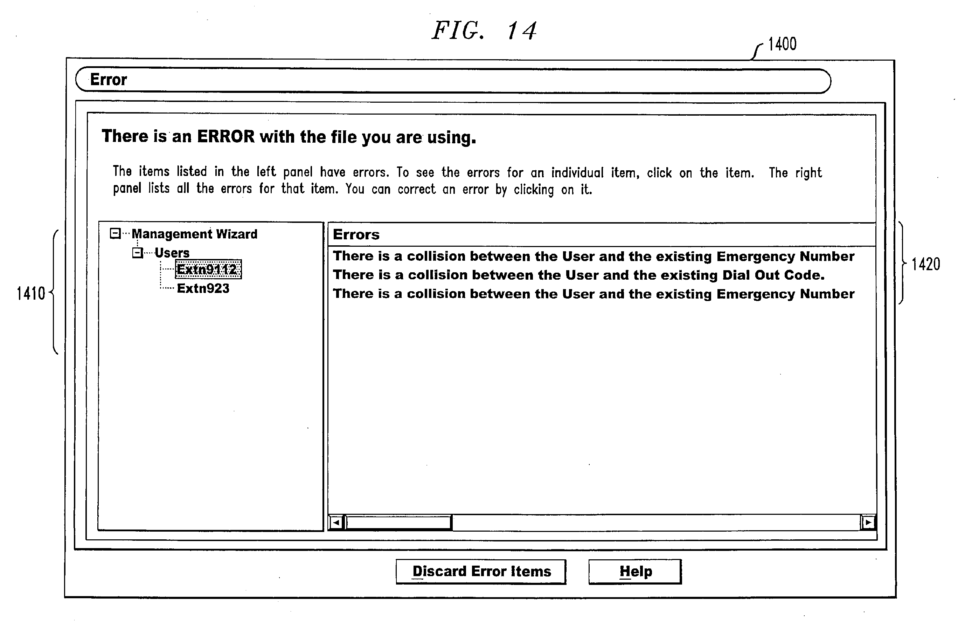

During step 6, an error tree is displayed to the user. As discussed below in conjunction with FIG. 14, an error tree 1400 displays errors for different failed users or hunt groups, after all entries in the dial plan import database 1100 are processed. The error tree 1400 provides a convenient mechanism for resolving errors through deletion, changes to the data or to other endpoints in the switch 150. After errors from the error tree 1400 are processed, program control returns to step 4 to revalidate the data, until all errors have been resolved or errors have been accepted.

FIG. 13 illustrates an exemplary dial plan interface 1300 that has been populated with imported dial plan information. As shown in FIG. 13, the exemplary dial plan interface 1300 includes a number of fields to indicate how extension and hunt group numbers will be used in the system 150. Among other benefits, the dial plan helps to ensure that there are no duplicate or conflicting extension or hunt group numbers. The dial plan interface 1300 includes a first section 1310 for specifying physical extensions, a second section 1320 for specifying virtual extensions, and a third section 1330 for specifying hunt group extensions. A button 1340 can optionally be provided to initiate the dial plan import process 1200.

FIG. 14 illustrates an exemplary error tree interface 1400 that has been populated with one or more errors. As shown in FIG. 14, the exemplary error tree interface 1400 includes a first section 1410 identifying one or more errors that were detected during the dial plan import process 1200 and a second section 1420 providing additional details on an error selected in the first section 1410. In the illustrative error tree interface 1400 detailed error information for a user error is indicated. If an error for a hunt group is selected in section 1410, the detailed error information associated with the error may indicate, for example, that two hunt groups have the same hunt group extension and/or same hunt group name.

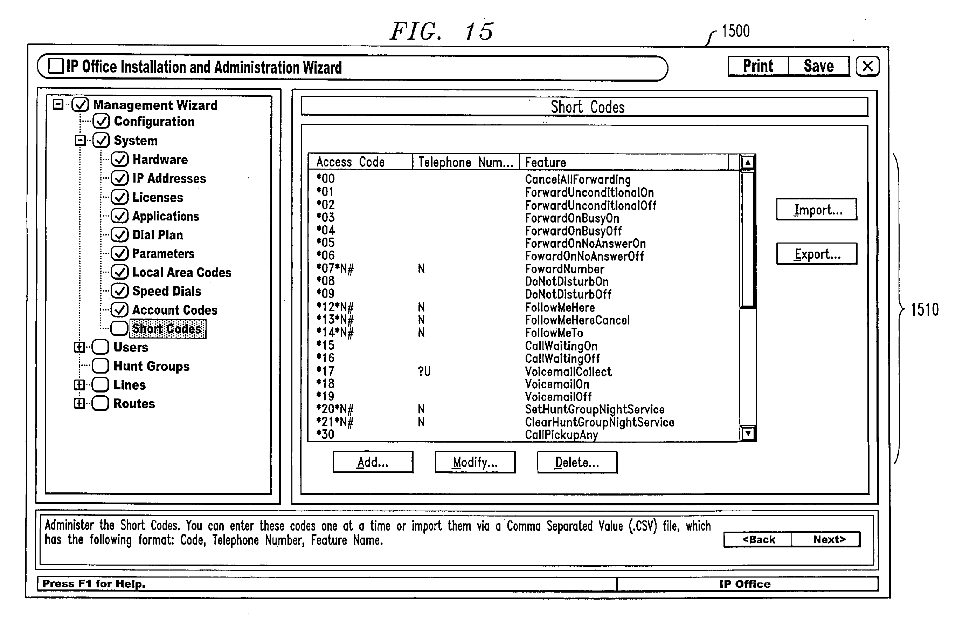

FIG. 15 illustrates an exemplary short code interface 1500 that has been populated with one or more short codes that have been defined for the system 150. As shown in FIG. 15, the exemplary short code interface 1500 identifies, for each short code, the corresponding access code, and an indication of the feature associated with the short code in section 1510.

Additional interfaces can be provided for the users, hunt groups that are created by the dial plan import process 1200 in a similar manner to the interfaces 700, 900, respectively, created by the user import process 400.

### Data Class Diagrams

FIG. 16 illustrates the relationship between the various data 1600 discussed herein, in accordance with exemplary Unified Modeling Language (UML) conventions. As shown in FIG. 16, an object of a configuration class 1610 is an aggregation of one or more short code objects 1620, user objects 1630 and hunt group objects 1640. The note 1650 associated with the configuration class 1610 indicates that an object of the Configuration class 1610 contains the system data. Each short code object 1620 is comprised of a string indicating the code, an indication of the feature associated with the short code and any additional information, like the telephone number. Each User object 1630 is comprised of a user name, full name, extension number and any short codes defined including those for buttons on the user's device. Each hunt group object 1640 is comprised of a name and extension number associated with the hunt group, as well as a member list. In addition, each of the short code objects 1620, user objects 1630 and hunt group objects 1640 optionally include one or more functions applicable to the object in the third class section.

### Validation Rules

In general, for any field within an endpoint in the system 150, there are two types of rules. Syntactic validation rules ensure that any field is validated for correct syntax as appropriate for that field. The syntax rules are generally for length, valid characters and if a field can be empty and, if so, what are the dependant rules. Conflict validation rules ensure that certain fields are unique across the system 150. For example, extensions and other dial-able endpoints must be unique. In addition, names of system endpoints that are used as login Identifiers in another context must be unique. Whether a field is unique is based on the following exemplary criteria and the reason for error, including any endpoint that this field might conflict with, should be identified for each variation:
a. exact field value must not be repeated, i.e., there should be no duplicates within the same endpoint type;
b. exact field value must not be found across different endpoint types;
c. pattern matching algorithms are applied where certain patterns are also considered to also be a duplicate (intelligent properties);
d. exact match against critical system endpoints, such as the emergency number (intelligent properties); and
e. exact match against global system endpoints, such as the dial out number, which is used to dial outside the switch, to call outside telephone numbers (intelligent properties).

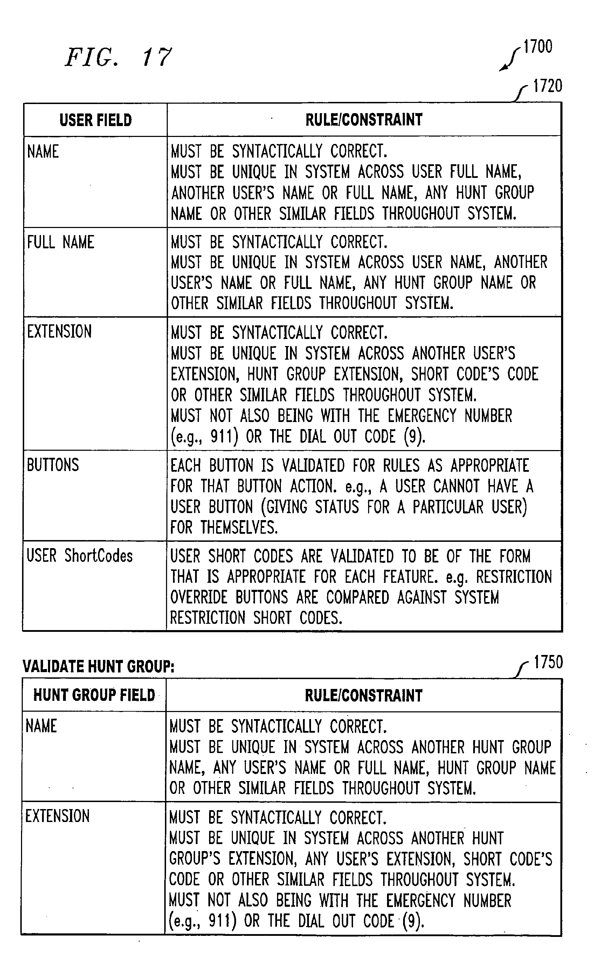

FIG. 17 is a sample table describing an exemplary validation rulebase 1700 that contains one or more syntax or conflict rules (or both). The exemplary validation rulebase 1700 contains a first set of rules 1720 to validate the user fields and a second set of rules 1750 to validate the hunt group fields. For each identified field, the validation rulebase 1700 indicates one or more exemplary corresponding rules or constraints. For example, a user name or hunt group name must be syntactically correct and unique across the system.

### Propagation Rules

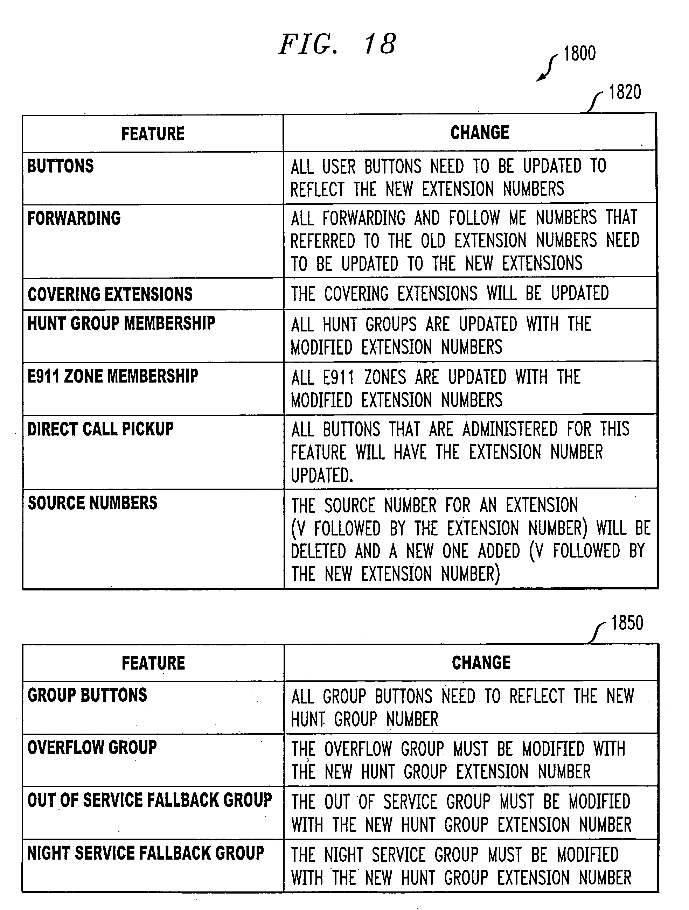

As previously indicated, a number of system parameters are automatically updated through a propagation mechanism for each user and hunt group update. FIG. 18 is a sample table describing an exemplary propagation rulebase 1800 that contains one or more propagation. The exemplary propagation rulebase 1800 contains a first set of rules 1820 to propagate user updates and a second set of rules 1850 to propagate the hunt group updates. For each identified update, the propagation rulebase 1800 indicates one or more exemplary corresponding changes that need to be propagated. For example, if a user extension number or name is changed, any Hunt Group that the user was a member of, is also updated to the new user name or extension.

### Class of Service Outside of Switch 150

As previously indicated, one aspect of the present invention allows the application to externally implement Class Of Service on behalf of the Switch 150.The class of service capability allows a class of service (e.g., properties, functionality and permissions) to be maintained for users in the system 150. When a user belongs to a particular class of service, that user gets all the properties and permissions defined for that class of service. Whenever a class of service gets modified, each user that is a member of the affected class of service gets that change seamlessly. Normally, if the switch supports class of service, the switch 150 maintains the class of service in its own database. The present invention maintains this database outside of the switch 150, and provides the class of service functionality using its template database.

The administration tool 200 provides one or more default templates, and also the ability to create custom templates using properties of existing users, or completely creating new templates with customized properties. Once a user is created in the system 125, that user can be organized in the system by using templates. A template can be applied to the newly created user, in the manner described above in conjunction with FIG. 4. Once a template is applied to a user, that user gets all the properties, permissions and functionality of that template.

If the template is associated to the user as a Class of Service, the user's data maintains the class of service's properties, permissions and functionality, until the administrator disassociates the user from the Class of Service. The system tracks the Class of Service and the users that belong to that Class of Service. The system can maintain multiple Classes of Service. With the aforementioned information, when a user deviates from the definition of its Class of Service, the administration tool 200 can prompt the administrator to either disassociate the user from the Class of Service or update the Class of Service and have the modified Class of Service applied to all users who belong to that Class of Service.

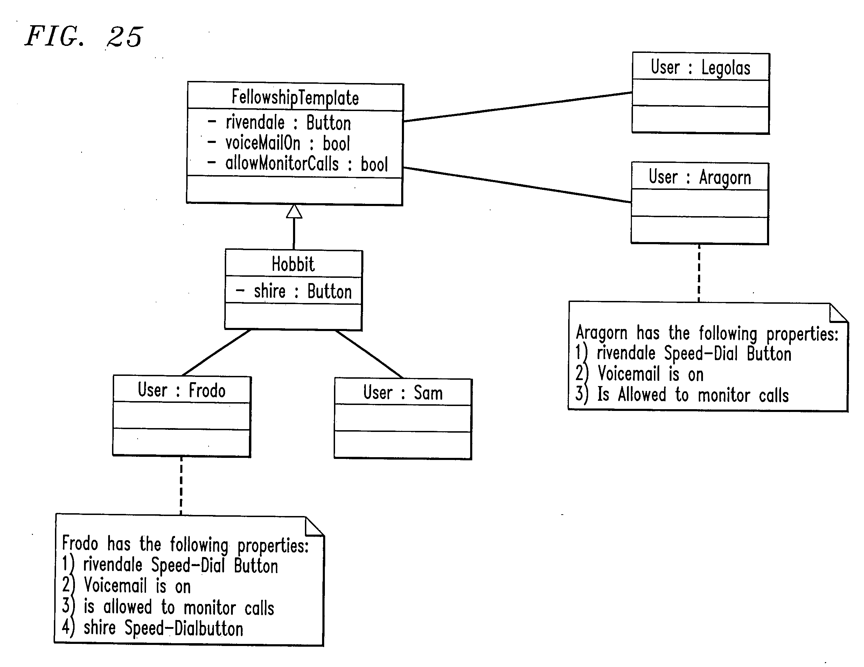

Class of Service can also be achieved through inheritance of templates. One template can inherit the properties from another template, by overlaying its properties on top of its inherited template. The inherited template can also inherit from another template and so on. This can be used to obtain unbounded levels of Class of Service. This would allow a user's or a group of users' Class of Service to deviate slightly from a more common Class of Service. Here, when a user deviates from the definition of its Class of Service, the administration tool 200 can prompt the administrator to either disassociate the user from the Class of Service or pick a template from the hierarchy of templates to apply the change to. Then the modified template is applied to all users whose Class of Service includes this template in its hierarchy as in FIG. 25.

As indicated above, the application of the user properties is done in an intelligent manner, so that the properties make sense for that particular user. For example, in the template, the user can override one or more system wide restrictions. When these restrictions are copied, the template does not copy the overridden restrictions as they are, but rather, will go to the system wide database, and obtain the restrictions at that point in time and override the restrictions for that user. Similarly, all the user specific properties are set, and other non-specific properties are copied as it was in the template. Another example is that in order to enable users for specific capabilities, example Enabling the user to be an application-specific agent, short codes are created specifically for each user using a particular pattern appropriate to the concerned capability.

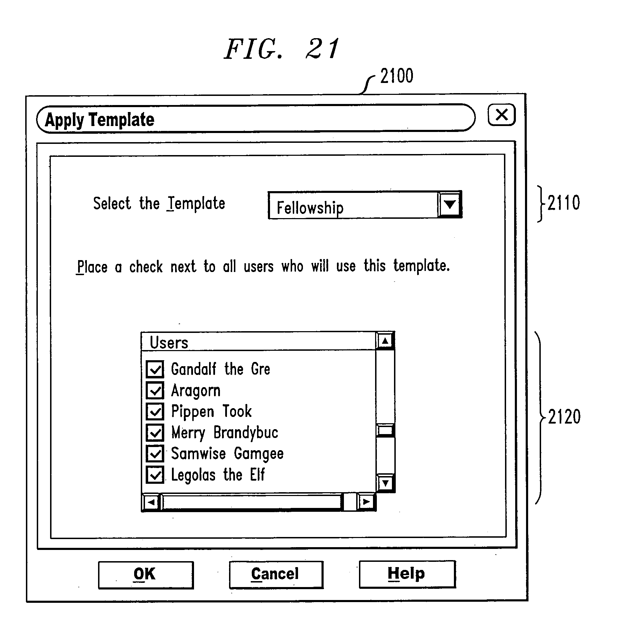

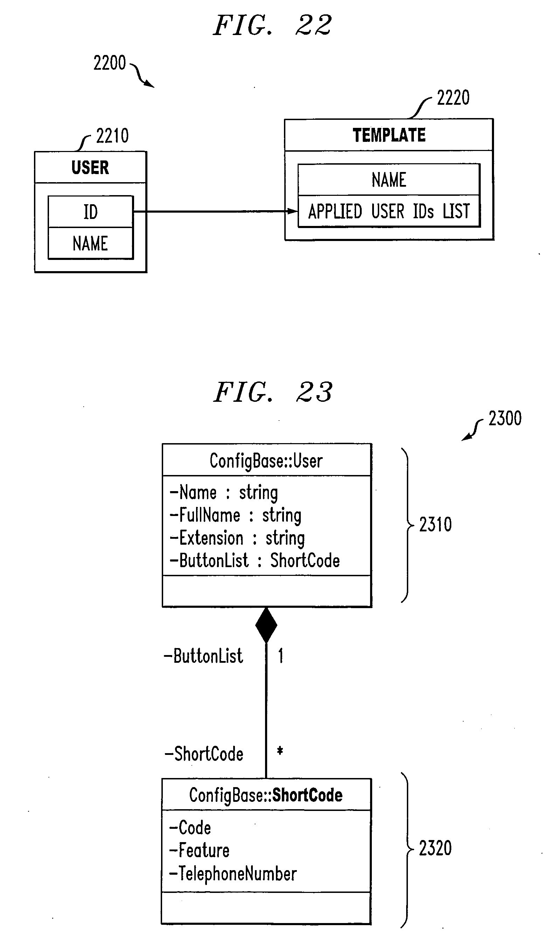

The administration tool 200 maintains a database of all the users for whom this template was applied, as discussed below in conjunction with FIGS. 21 and 22. Whenever a template is modified, the administration tool 200 prompts the administrator to apply this change to all the users associated with the template. The administrator can select to apply the change for all the users or only to a subset of users. Then, the template will be applied to the selected users, and the database will be modified to keep only those newly applied users in this changed class of service or template.

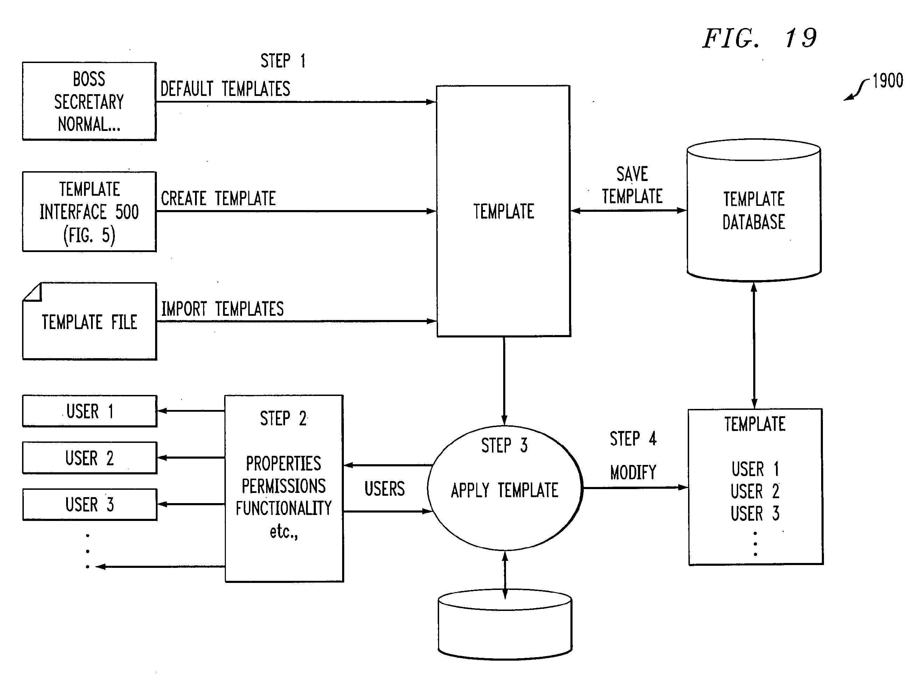

FIG. 19 is a flow chart describing an exemplary implementation of a class of service process 1900 that incorporates features of the present invention. Generally, the class of service process 1900 maintains a class of services database so that configuration data may be administered on line or offline. As shown in FIG. 19, the class of service process 1900 initially creates one or more users in the system during step 2. A user can be created during a dial plan setup (see, e.g., FIG. 12), a user import (see, e.g., FIG. 4) or through the manual creation of a user.

A template is applied to one or more users during step 3, for example, during execution of the user import process 400. The scalar properties of a template are applied to the user, as well as an intelligent pattern application for dependant data structures, such as short codes and restriction numbers in the system.

A class of service is created during step 4 for offline storage by the administration tool 200. Generally, a template to be applied is selected from Template DB; the users in the system are selected to apply template properties; user references are saved in the template; and the template is saved.

If a template is changed, the template properties are modified. The template changes are then reapplied. A newly applied users list will be saved with the template. As previously indicated, a database will contain a list of users associated with a template. The administrator can then choose which users to update. Once the administrator has selected the user(s), the modified template properties will be applied to those selected users. After the application, the old applied user object identifier list will be deleted, and the newly applied users list will be saved with the template. In this manner, the template contains the current applied users list.

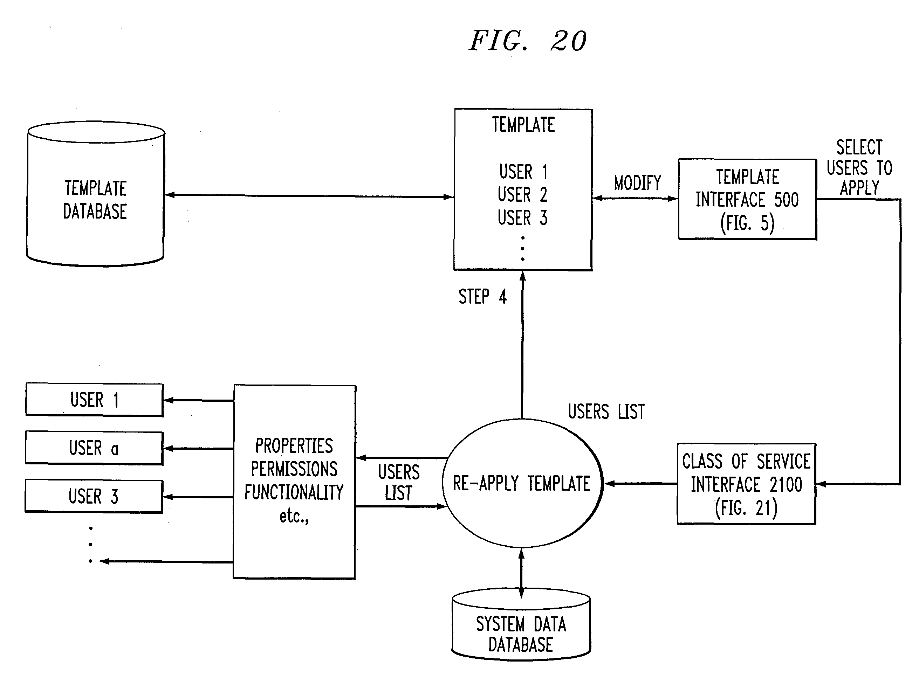

FIG. 20 is a flow chart describing an exemplary implementation of an alternate class of service process 2000 that incorporates features of the present invention. A class of service is again created during step 4 for offline storage by the administration tool 200.

FIG. 21 illustrates an exemplary class of service interface 2100 that indicates the users associated with a given template (class). As shown in FIG. 21, the exemplary class of service interface 2100 includes a first field 2110 that allows a user to select a given template, and a second field 2120 that identifies the current list of users associated with the selected template.

FIG. 22 illustrates the relationship between the user and template data objects to implement the class of service feature, in accordance with exemplary Unified Modeling Language (UML) conventions. As shown in FIG. 22, each user object 2210 is comprised of an identifier and a user name. Each template object 2220 is comprised of a template name and a list of all the users (by identifier) that have been associated with the template.

### Different Views of Telephone Sets

According to another aspect of the invention, the administration tool 200 can present buttons on different types of sets without losing the data. The switch 150 may not keep track of the telephone type that is plugged into a particular port. Currently, with a conventional administration application, an administrator could program buttons that would never be seen by the end user. This function allows the user to view all of the supported sets during administration. This will allow the administrator to (i) change the set type for a particular user based on the buttons that are programmed (for example, if there were buttons that didn't show up in one view, but did in another, they would know to change the set); or (ii) for existing configurations, the administrator can determine why people cannot see a programmed button.

The users and their corresponding extensions (phones) are based on the type of hardware module they reside on. The set views are based on the type of module the phone is connected to. The user selects the different views via radio button selection on the administration forms, such as the template button interface 600 (FIG. 6) that indicates how the buttons on a given telephone device are programmed for a given template..

There are some rules that defme which phone is applicable to the user.

FIG. 23 illustrates the relationship between the user and short code data objects to implement the telephone set view feature. As shown in FIG. 23, each user object 2310 is comprised of a user name, full name, extension number and any short codes defined for buttons on the user's device. Each short code object 2320 is comprised of a string indicating the code, an indication of the feature associated with the short code and any additional information. In this manner, the buttons on a given set can be easily associated with the corresponding short codes.

As shown in FIG. 23, all the buttons are stored in an array of the user class by the button number. The administration tool 200 maintains the set layout for each phone type, and displays the buttons according to the set, and its button location. Based on set type, the administration tool 200 displays the set layout with all the button values in place.

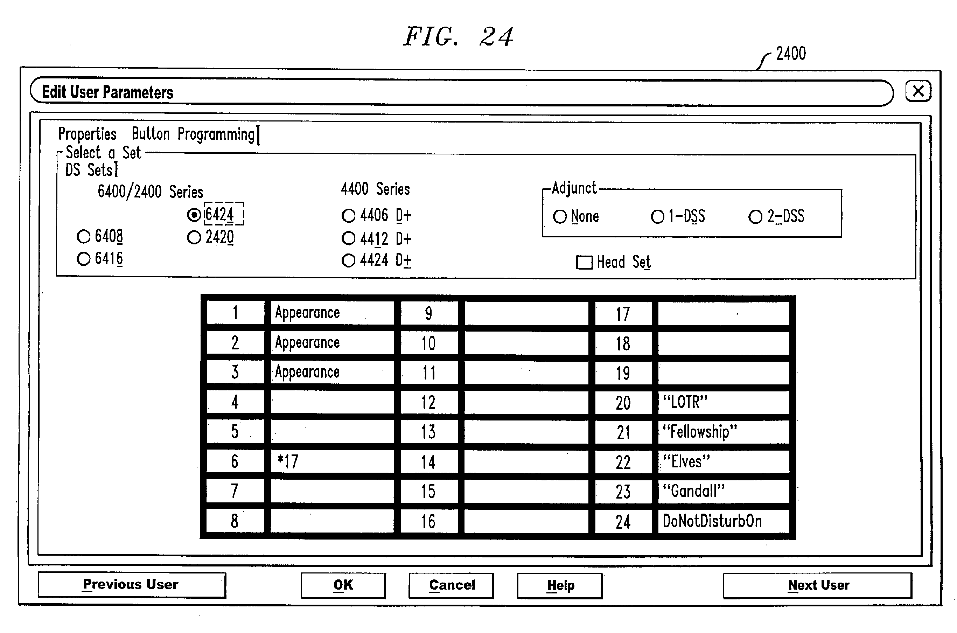

The administrator should be able to click on any set type and view the button values for a specific user. The template button interface 600 shown in FIG. 6 is for a default telephone set type (model 4412). The button interface 2400 shown in FIG. 24 is for an alternate exemplary selected telephone set type (model 6424)

Normally, the set type is stored by conventional switches, and the administrator will not be able to modify the set type without changing the data. In other words, when a set type is changed, the data is lost if that set type is not supported by the newly specified set. Thus, the change to a new set is difficult, since the user may lose the data. The present invention saves all the button data in an array list regardless of the set type. When a set type is assigned, the buttons look and work same as they were programmed for that particular set. The administration tool 200 takes advantage of this behavior of the switch 150, and provides different views for different types of sets. Thus, providing the ability to change the set type for the user based on the user needs.

### System and Article of Manufacture Details

As is known in the art, the methods and apparatus discussed herein may be distributed as an article of manufacture that itself comprises a computer readable medium having computer readable code means embodied thereon. The computer readable program code means is operable, in conjunction with a computer system, to carry out all or some of the steps to perform the methods or create the apparatuses discussed herein. The computer readable medium may be a recordable medium (e.g., floppy disks, hard drives, compact disks, or memory cards) or may be a transmission medium (e.g., a network comprising fiber-optics, the world-wide web, cables, or a wireless channel using time-division multiple access, code-division multiple access, or other radio-frequency channel). Any medium known or developed that can store information suitable for use with a computer system may be used. The computer-readable code means is any mechanism for allowing a computer to read instructions and data, such as magnetic variations on a magnetic media or height variations on the surface of a compact disk.

The computer systems and servers described herein each contain a memory that will configure associated processors to implement the methods, steps, and functions disclosed herein. The memories could be distributed or local and the processors could be distributed or singular. The memories could be implemented as an electrical, magnetic or optical memory, or any combination of these or other types of storage devices. Moreover, the term "memory" should be construed broadly enough to encompass any information able to be read from or written to an address in the addressable space accessed by an associated processor. With this definition, information on a network is still within a memory because the associated processor can retrieve the information from the network.

It is to be understood that the embodiments and variations shown and described herein are merely illustrative of the principles of this invention and that various modifications may be implemented by those skilled in the art without departing from the scope and spirit of the invention.

## Claims

1. A method for administering a private branch exchange switch, comprising:
processing a plurality of data objects associated with one or more endpoints of said private branch exchange switch, wherein at least me of said plurality of data objects inherits an intelligent property that overrides a default restriction from another data object based on one more endpoint-specific criteria.

2. The method of claim 1, wherein at least one of said plurality of data objects inherits at least one scalar property from another data object based on one more patterns.

3. The method of claim 1, wherein said inheritance is through application of a template to said data object.

4. The method of claim 3, further comprising the step of maintaining a list of data objects associated with each template.

5. The method of claim 1, wherein said intelligent property is evaluated at a time of said inheritance.

6. The method of claim 1, wherein said processing may be performed offline from said private branch exchange switch, using one or more classes of service that are stored remote from said private branch exchange switch.

7. The method of claim 1, further comprising the step of propagating changes to affected data objects.

8. The method of claim 1, wherein said intelligent property is a short code generated based on said user-specific criteria.

9. The method of claim 1, wherein one or more of said data objects are user objects, and wherein said user data objects can be physical or virtual objects.

10. The method of claim 1, wherein one or more of said data objects are hunt group objects.

11. The method of claim 1, wherein one or more of said data objects are system wide short code objects.

12. The method of claim 1, further comprising the step of automatically creating one or more hunt groups populated with appropriate users.

13. The method of claim 1, further comprising the step of generating one or more views of a telephone set based on said data objects.

14. A system for administering a private branch exchange switch, comprising:
a memory; and
at least one processor, coupled to the memory, operative to:
process a plurality of data objects associated with one or more endpoints of said private branch exchange switch, wherein at least one of said plurality of data objects inherits an intelligent property that overrides a default restriction from another data object based on one more endpoint-specific criteria.
